# EUROPÄISCHE PATENTSCHRIFT

(11) **EP 2 435 736 B1**
(45) Veröffentlichungstag und Bekanntmachung des Hinweises auf die Patenterteilung: **27.03.2013**
(21) Anmeldenummer: 11724614.0
(22) Anmeldetag: 06.06.2011
(51) Int. Cl.: F16K 25/00, F16K 25/04

(54) **REGELVENTIL, INSBESONDERE ECKREGELVENTIL UND DOPPELREGELVENTIL, AUCH ALS GERAD- UND SCHRÄGSITZVENTIL, FÜR EXTREME REGELANWENDUNGEN**
CONTROL VALVE, IN PARTICULAR ANGLE CONTROL VALVE AND DOUBLE CONTROL VALVE, ALSO IN THE FORM OF A STRAIGHT-SEAT VALVE AND INCLINED-SEAT VALVE FOR EXTREME CONTROL APPLICATIONS
SOUPAPE DE RÉGULATION, NOTAMMENT SOUPAPE DE REGULATION ANGULAIRE ET SOUPAPE DE REGULATION DOUBLE, SERVANT AUSSI DE SOUPAPE A SIEGE DROIT ET OBLIQUE, POUR DES APPLICATIONS DE REGULATION EXTREMES

(30) Priorität: 20.08.2010 DE 202010008318 U; 10.02.2011 DE 202011000299 U
(43) Veröffentlichungstag der Anmeldung: 04.04.2012
(73) Patentinhaber: SchuF Armaturen und Apparatebau GmbH, 65817 Eppstein (DE)
(72) Erfinder: FRANK, Martin, 65719 Hofheim (DE)
(74) Vertreter: Aue, Hans-Peter
(86) Internationale Anmeldenummer: PCT/EP2011/059316
(87) Internationale Veröffentlichungsnummer: WO 2012/022511

(56) Entgegenhaltungen:
- US-A1- 2008 060 704
- US-A1- 2008 277 616

## Beschreibung

Die Erfindung bezieht sich auf ein Regelventil, insbesondere Eckregelventil und Doppelregelventil, auch als Gerad- und Schrägsitzventil, für extreme Regelanwendungen mit erosiven und korrosiven Medien bei Temperaturen über 500°C und Druckabfälle über 100 bar, vorzugsweise zum Ablassen bzw. Herunter-regulieren für Hochdruck-Heißabscheider, Mitteldruck-Heißabscheider und Vakuumdestillationskolonnen, insbesondere für Hydrierung und davon insbesondere für die Kohleverflüssigung, im Wesentlichen mit einem Einlasstrichter, einem mit Wolframcarbid ausgekleideten Auslasstrichter, dazwischen angeordneten Ventilsitzen und einem mit einem Regelventilkopf versehenen Ventilkolben, wobei die Ventilsitze und die Ventilköpfe aus massivem Wolframcarbid bestehen und der Ventilkolben und der Ventilkopf einteilig ausgebildet sind.

In üblichen Hydrier- (oder Upgrader-)Anlagen werden schwere Kohlenwasserstoffe mit Wasserstoff angereichert, um leichtere Kohlenwasserstoffe, die für Transportmaschinen, insbesondere für Flugzeuge und Kraftfahrzeuge, geeignet sind, herzustellen. Die Reaktion zwischen Wasserstoff und Kohlenwasserstoff findet bei hohem Druck und hoher Temperatur statt und resultiert in einem Gemisch, deren Komponenten dann in verschiedenen Stufen abgeschieden werden müssen, nämlich in Hochdruck-Heißabscheidern, Mitteldruck-Heißabscheidern, sowie in atmosphärischen und VakuumDestillationskolonnen.

Hierfür werden Regelventile in kritischen Medien mit extremen Bedingungen eingesetzt, z.B. um in Hochdruck-Heißabscheidern abzulassen, d.h. herunter zu regulieren. Dabei wird der Druck zwischen den Stufen abgebaut und der Durchfluss des Mediums geregelt.

In den Regelventilen findet zwangsläufig eine Verdampfung, teilweise überkritisch, statt, da der Druck in jedem Ventil unter den Dampfdruck fällt. Dies verursacht Kavitation, Erosion und Vibration in den Ventilen und eventuell den Rohrleitungen, was durch die Präsenz von Feststoffen, wie z.B. Katalysatorreststoffen, noch verschlimmert wird. Die kritischste Anwendung erfolgt bei der Kohleverflüssigung, in der Kohle den schweren Kohlenwasserstoff liefert. Die Asche reagiert nicht mit dem Wasserstoff und erhöht den Feststoffanteil dramatisch. Außerdem ist sie sehr erosiv.

Das Medium strömt mit einem Hochdruck und wird von etwa 200 bar auf etwa 40 bar abgebaut. Dabei verdampft das Medium und zerstört die Teile des Ventilsitzes, des Ventilkopfes und der Ventilspindel bzw. den Ventilkolben. Da das Medium in der Regel feststoffhaltig ist, werden die Feststoffe gegen die Ventilinnenwände geschleudert und erzeugen Abrieb. Hinzu kommt, dass die Vibrationen in der Rohrleitung sehr hoch sind und somit ein hoher Grad der Zerstörung der Ventilteile stattfindet. Dies geschieht auch dadurch, dass der meist kegelförmige Ventilkopf des Ventilkolbens gegen den Ventilsitz schlägt.

Die Ventilgehäuseteile des Regelventils bestehen in der Regel aus Stahl oder Edelstahl. Die Temperatur des Mediums ist meistens sehr hoch, beispielsweise 500°C. Darüber hinaus weisen Regelventile einen Ventilsitz und einen Ventilkopf aus massivem Wolframcarbid auf, besitzen also nicht nur eine Beschichtung. Der Ventilkolben besteht aus Edelstahl. Jedoch kann ein Ventilkopf aus Wolframcarbidkegel nicht einfach am Ventilkolben aus Stahl verschweißt werden. Daher verbindet aufwändig ein zweigeteilter Ring aus Edelstahl die beiden Teile und wird dann verschweißt. Eine warmfeste, d.h. hochtemperaturbeständige Tellerfeder aus Inconel drückt den Ventilkolben gegen den Ventilkopf, wenn die Stahlteile durch die hohen Temperaturen expandieren.

Bei dieser hohen Temperatur dehnt sich der Stahl erheblich aus, Wolframcarbid jedoch nicht, da dieses Material einen viel kleineren Wärmeausdehnungskoeffizienten besitzt. Beim Öffnen des Regelventils treten starke Strömungskräfte auf, so dass der Ventilkolben Vibrationen ausgesetzt ist. Dabei schlackern die Teile des Ventilkolbens und des Ventilkopfes im Ventilsitz. Um diese Vibrationseinwirkungen zu verringern, wurden Dämpfungsringe aus Graphit in den Auslasstrichter eingesetzt, die jedoch nicht die gewünschte Wirkung hatten und sich nach einiger Zeit auflösten.

Weitere Probleme treten u.a. dadurch auf, dass die verwendeten Wolframcarbid-Innenteile in Gehäuseteilen aus Stahl sitzen. Durch die unterschiedlichen Wärmeausdehnungskoeffizienten bilden sich relativ große Spalten, was die Wolframcarbidteile vibrationsanfällig macht. Zwischen die sich bildenden Spalten setzt sich dann das Medium ab. Bei Abkühlung verkleben die Teile. Deshalb ist das Regelventil sehr schwer auseinander zu bauen, um die verklebten Teile zu ersetzen.

Weiterhin müssen andere Wolframcarbidteile, wie der Ventilkopf, mit Stahlteilen, wie dem Ventilkolben, fest verbunden werden, was aus den genannten Gründen sehr kompliziert ist. Des Weiteren ist Wolframcarbid sehr teuer und hat lange Lieferzeiten.

Bekannt sind auch sogenannte Verteilerventile, in denen in einem Gehäuse das Medium verteilt wird. Nicht bekannt hingegen sind Doppelregelventile, d.h. zwei Regelventile in einem Gehäuse.

Aus der US 2008/0060704 A1, die die Merkmale des Oberbegriffs des Anspruchs 1 zeigt, ist ein auswechselbarer Auslasseinsatz für ein Steuerventil bekannt, im Wesentlichen mit einem Einlasstrichter, einem Auslasstrichter sowie dazwischen angeordneten Ventilsitzen und einem mit einem Ventilkopf versehenen Ventilkolben, wobei der Ventilkolben und der Ventilkopf einteilig ausgebildet sind.

Es ist Aufgabe der Erfindung, ein Regelventil der eingangs genannten Art zu schaffen, das die genannten Probleme beseitigt und die Innenteile des Regelventils besser gegen aggressive Medien schützt und den Durchfluss des Mediums zuverlässiger regelt.

Erfindungsgemäß wird die Aufgabe dadurch gelöst, dass
- der Ventilkolben und der Ventilkopf aus Wolframcarbid bestehen,
- der Ventilkopf vorzugswese eine verkürzte, also etwa halbkreisförmige Kugelregelkontur besitzt oder
- der Ventilkopf eine Tassenform mit einem oder mehreren Schlitzen aufweist, wobei der hohle Innenteil stromabwärts gerichtet ist,

- mittig im Übergang vom Einlasstrichter zum inneren Ventilsitz bei Bedarf eine Wandung um den Ventilkolben herum schützend in den Gehäusehohlraum ragt und der Strömungsdurchgang um die Wandung und den Ventilkolben durch eine etwa halbkreisförmige Strömungskontur gebildet ist,
- das Ventilgehäuse, der Ventilsitz und ein Packungshalter gegebenenfalls so ausgeformt sind, dass sich der Innenhohlraum vom Ventileintritt zum Ventilsitz kontinuierlich verengt, was eine Verdampfung stromauf des Ventilsitzes verhindert,
- gegebenenfalls eine oder mehrere Druckminderungsstufen im Ventilsitz und/oder im Auslasstrichter ausgebildet sind,
- die Auskleidung im Auslasstrichter und/oder der Ventilsitze durch mindestens eine neuartige Tellerfeder gegen die Trichterwandung bzw. den Ventilsitzhalter verspannt und/oder mittels einer Lederumwicklung gegen Vibration geschützt ist,
- am Ende des Ventilsitzes und/oder im Auslasstrichter bei Bedarf ein Bett aus Wolframcarbidkugeln als alternative Druckabbaustufe ausgebildet ist,

Ziel ist es, den Kontakt des erosiven Mediums durch dessen Aufprallen auf den Ventilkopf und den Ventilsitz weitgehend zu reduzieren und Spaltbildungen zwischen den Stahlteilen und den Innenteilen aus Wolframcarbid zu vermeiden, insbesondere im Ventilsitz- und Auslassbereich des Regelventils. Des Weiteren sollen eine Verdampfung des Mediums vor dem Ventilsitz weitestgehend eliminiert und ein großer Anteil vom Ventilsitz stromabwärts in verschiedene Zusatzdruckabbaustufen verlagert werden. Die Kavitation, Erosion und Vibration findet dadurch weniger im hubaktiven Kegel und Sitz und mehr in den widerstandfähigeren Zusatzdruckabbaustufen statt.

Bei dem erfindungsgemäßen Regelventil sind somit der Ventilkolben (auch als "Ventilspindel" bezeichnet) und der Ventilkopf komplett aus einem Stück vollständig aus massivem Wolframcarbid ausgebildet. Wolframcarbid ist ein sehr hartes Material und daher für Ventilteile, die aggressiven Medien mit hohen Temperaturen und Drücken ausgesetzt sind, hervorragend geeignet. Dadurch wird das komplizierte und aufwändige Verbinden und gegebenenfalls Demontieren von Ventilkolben und Ventilkopf vermieden. Allerdings fehlt Wolframcarbid die notwendige Elastizität, deshalb muß der Ventilkolben gegen Seitenbelastung geschützt werden.

Die verkürzte, etwa halbkreisförmige Kugelkontur des Ventilkopfes gewährleistet mit dieser kürzeren Regelkontur eine optimale Abwägung zwischen Regelleistung und Lebensdauern. Es wird dabei zwar eine geringfügig schlechtere Regelkontur bzw. Regelcharakteristik erzielt, dafür werden aber die Vibrationen des Ventilkopfes gegen den Ventilsitz verringert. Dabei wird auch verhindert, dass der Wolframcarbid-Ventilkopf exzessiven Vibrationen ausgesetzt ist. Der kürzere dickere Ventilkopf bewirkt weniger Aussetzungen (Schlackern) und der Ventilkolben kann außerhalb des Betätigungsbereiches des Kolbens, nämlich in einem zuvor angeordneten hohlen Verbindungsteil, das auch als "Laterne" bezeichnet wird, befestigt werden.

Der parabolische Ventilkopf hat eine volllineare Regelkontur, um gut zu regeln, ist aber längenreduziert, damit der Ventilkopf nicht zu sehr der seitlich wirkenden Kraft infolge des seitlichen Strömungsaufpralls des Mediums ausgesetzt ist.

Alternativ wird ein tassenförmiger Ventilkopf aus massivem Wolframcarbid im Ventilsitz geführt. Entgegen des üblichen Kegels gibt es keine parabolische Regelkontur des Ventilkopfes. Stattdessen hat er die Form einer Tasse, wobei der hohle Innenteil stromabwärts gerichtet ist. Das Medium strömt durch einen oder mehrere Schlitze stromabwärts durch den Ventilsitz bzw. in den Auslasstrichter. Dies erlaubt eine variable Begrenzung der Öffnungscharakteristik des Regelventils, wenn der tassenförmige Ventilkopf mit dem Ventilkolben geöffnet ist. Die Tassenform des Ventilkopfes stellt somit eine V-förmige Erweiterung dar, die es erlaubt, wie ein sich erweiternder Ventilsitz zu wirken.

Weitere Ausgestaltungen und Vorteile des erfindungsgemäßen Regelventils ergeben sich aus den Unteransprüchen.

Demgemäß sind die Schlitze in Bewegungsrichtung des Ventilkolbens in die Außenwandung des tassenförmigen Ventilkopfes verteilt eingebracht und derart angeordnet, dass die Medienströmungen durch die zwei oder mehreren Schlitze, also von mehreren Seiten, aufeinanderprallen und verwirbeln. Dabei wird Energie verbraucht und der Zerstörungsgrad erheblich vermindert. Die Verbindung von Ventilkolben und umliegenden Stahlteilen findet außerhalb des Medium-Strömungsflusses statt.

Weiterhin ist der hohle Innenteil des tassenförmigen Ventilkopfes konisch mit demselben Winkel wie die Erweiterung des Ventilsitzes ausgebildet.

In der Regel besteht eine relativ lange gerade Wegstrecke für den Ventilkolben, die gegen das Medium und Vibrationen ungeschützt ist. Um den Schutz zu verbessern, wird der Gehäuseinnenraum um den Ventilsitz herum verändert. Entgegen der Strömungsrichtung gesehen, ragt mittig eine Metallwandung in den Strömungsdurchgang und schützt den Ventilkolben weitgehend gegen den Aufprall des Medienstromes. Dabei ist der Mediendurchfluss gewährleistet, indem der Gehäuseinnenraum seitlich eine etwa halbkreisförmige Strömungskontur aufweist.

Nach einer weiteren Ausbildung sind die mehreren Druckminderungsstufen wechselweise sich erweiternd und verengend hintereinander in Strömungsrichtung des Mediums im Ventilsitz und/oder im Auslasstrichter angeordnet, so dass der Mediendruck abgebaut werden kann.

Bevorzugt sind im oder hinter dem Ventilsitz zwei oder mehrere feste Druckminderungsstufen ausgebildet, um den Druckabbau zu verlagern. Dies hat den Vorteil, dass 50% oder mehr des Druckes mit mehr als 50% Verdampfung in dieser zweiten Druckminderungsstufe abgelassen wird. Der Ventilkopf wird nun nur noch dem abgelassenen Druck und der Verdampfung in der ersten Druckminderungsstufe ausgesetzt. Dabei liegt zwischen P1 (vor der ersten Stufe) und P2 (hinter der letzten Stufe) ein intermediärer Druck Pi an. Der Ventilkopf des Ventilkolbens muss dann nicht mehr den vollen Druckabbau aushalten, also nicht mehr P1 - P2, sondern nur noch P1 - Pi. Da die Verdampfung hauptsächlich bei Drücken unter Pi stattfindet ist er auch weitgehend vor Kavitation geschützt.

Eine weitere Ausbildung der Erfindung betrifft ein Bett aus Wolframcarbidkugeln, ähnlich Kugeln in Wälzlagern. Dies erzeugt ein Labyrinth als zweite Druckminderungsstufe, aber mit einem guten Antierosionsprofil, da jede Kugel einen idealen Erosionswiderstand aufweist. Dabei kann das Medium auch eine Menge von kleinen Festkörpern aufweisen, welche sich durch das Labyrinth der Kugeln hindurcharbeiten können, da die Kugeln des Labyrinths selbst in der Lage sind, sich zu bewegen.

Das Bett aus Wolframcarbidkugeln ist strömungseingangsseitig und strömungsausgangsseitig durch Siebplatten begrenzt, wobei die Löcher der Siebplatten vorzugsweise eine quadratische Form aufweisen, damit sich die Kugeln auf die Löcher setzen können und dennoch das Medium strömen kann.

Ferner sind strömungsausgangsseitig zumindest zwei hintereinander angeordnete Siebplatten vorgesehen, wobei die erste Siebplatte aus massivem Wolframcarbid besteht, um der Erosion zu widerstehen. Da Wolframcarbid keine große Elastizität besitzt, stützt die zweite Siebplatte aus Stahl die erste Siebplatte aus Wolframcarbid.

Die Löcher der zweiten Siebplatte sind genau hinter den Löchern der ersten Siebplatte angeordnet. Alternativ sind die Löcher der ersten Siebplatte geringfügig kleiner als die Löcher der zweiten Siebplatte ausgebildet, wobei sich die Löcher der zweiten Siebplatte konisch erweitern, um eine Zerstörung der zweiten Siebplatte aus Stahl zu verhindern.

Die Kugeln sind wegen ihrer optimierten Form ein geeignetes Mittel gegen Erosionen. Durch das Kugelbett wird das Medium abgebremst und Druck abgebaut. Es entsteht wieder ein intermidärer Druck Pi.

Bei einer vorteilhaften Ausgestaltung weist eine dem Ventilsitz nachgeordnete Druckminderungsstufe im Auslasstrichter in Strömungsrichtung des Mediums eine rapide Erweiterung auf, wobei der unmittelbare Übergang vom Ventilsitz in den Auslasstrichter vorzugsweise schalenförmig mit kleinem Radius erfolgt. Diese rapide, d.h. plötzliche Erweiterung im Ventilausgang beträgt weit mehr als 40° im Querschnitt des Ausgangs. Stand der Technik ist eine graduelle, d.h. stufenweise Erweiterung mit weniger als etwa 40°, bezogen auf die Längswand im Auslasstrichter zur Austrittsöffnung des Ventilsitzes, um die laminare Strömung zu erhalten und eine Ablösung der Strömung von der Wand und damit erhöhte Turbulenzen zu verhindern. Eine EDV-gestützte Simulation zeigt, dass Turbulenz bei kritischen Medien und hohen Druckabfällen ohnehin nicht zu verhindern ist, eine laminare Strömung also nicht zu erreichen ist. Die rapide Erweiterung um weit mehr als 40° ermöglicht aber eine sehr schnelle und starke Reduktion der Strömungsgeschwindigkeit des Mediums, was höhere Vorteile als die graduelle Erweiterung mit weniger als etwa 40° bringen würde.

Auch der Auslasstrichter des Regelventils muss gegen Erosion geschützt sein. Ein massiver Wolframcarbid-Trichter als Auskleidung ist im Innern des Auslasstrichters eingesetzt. Da sich der metallische Auslasstrichter mehr als die Wolframcarbid-Auskleidungen ausdehnt, beginnen die Auskleidungen zu schlackern. Um dies zu verhindern, wird eine hochtemperaturbeständige schräg gestellte Radialfeder mit kegeliger Ringschale verwendet, die abgewinkelt, ähnlich einer Tellerfeder, eingesetzt ist, um einen Federeffekt auszuüben.

In den Auslasstrichter wird die Tellerfeder bzw. Radialfeder eingebracht, deren Ringumfang etwa 300° beträgt. Diese wird vor dem Einsetzen zusammengedrückt und entspannt sich nach dem Einsetzen, beispielsweise in einer Nut um den Auslasstrichter. Insofern muss der der Ringumfang deutlich kleiner als 360° sein, ähnlich einem Sprengring. Die Tellerfeder soll ihre Federkraft entfalten, wenn sich der Stahl ausdehnt und damit die hülsenartigen Auskleidungen aus Wolframcarbid gegen den expandierenden Stahl festhalten. Weiterhin besteht die Tellerfeder aus Inconel, einer korrosions- und temperaturbeständigen Nickelbasislegierung.

Weiterhin ist vorgesehen, dass der Ventilsitzhalter und der Packungshalter in Strömungsrichtung sich leicht konisch verjüngend ausgebildet sind, die gegen den sich ebenfalls leicht konisch verjüngenden Ventilgehäuse verpresst sind. Weiterhin ist vorgesehen, dass die innerne und äusseren Ventilsitze in einem Einsatzkörper aus Stahl gehalten werden.

Der Einsatzkörper ist in Strömungsrichtung sich leicht konisch verjüngend eingesetzt und gegen das sich ebenfalls leicht konisch verjüngenden Ventilgehäuse verpresst. Dadurch kann der Einsatzkörper weiter im Gehäuseinnenraum gleiten, da er sich infolge der hohen Temperatur ausdehnt. Dabei werden Spaltbildungen verhindert.

Zweckmäßigerweise wird bisher Wolframcarbid verwendet enthaltend 6% Bindemittel, nämlich Kobalt oder Nickel. Die Korngröße des Wolframcarbids ist fein. Um ein optimales Material für den Ventilkolben zu bekommen sollte die Korngrö-βe auf mittel vergrößert werden und mindestens 10% Bindemittel verwendet werden um die Elastizität zu erhöhen. Das Bindemittel sollte dann aber vor Auswaschen geschützt sein bei der Anwendung einer speziellen, härtenden Beschichtung.

Des Weiteren können die Ventilteile, insbesondere die Innenteile, statt aus Wolframcarbid aus Keramik, z.B. SiN oder SiC, oder einer Mischung von Wolframcarbid und Keramik bestehen (nicht Gegenstand der beanspruchten Erfindung). Dabei kann die Keramik mit Graphitfasern verstärkt sein.

Ferner sind kurze Packungshalter oder ähnliche Dämpfungseinrichtung zwischen den Wolframcarbid- oder Keramikteilen und dem Stahlkörper und den Ventilsitzhalteteilen vorgesehen, um Vibrationsschäden zu verhindern, die den Abstand zwischen den Wolframcarbid- oder Keramikteilen und dem Stahlkörper und dem Sitzhalter infolge unterschiedlicher Wärmeausdehnung während des Aufheizens erhöhen.

Stand der Technik ist ein langer Packungshalter, da der Ventilkolben möglichst breit über seine Länge geführt wird. Jedoch kann die produktseitige Hochtemperaturpackung nur schwer mittels Schrauben angezogen werden, d.h. es baut sich nicht genügend Spannung auf, so dass Leckagen auftreten. Damit tritt Medium in das Verbindungsteil zwischen Ventil und Antrieb ein, was den Zugang und Austausch von Ventilteilen erschwert. Ein nun verkürzter Packungshalter lässt sich einfacher einsetzen und dichtet den Ventilsitz besser ab.

Das Ventilgehäuse, der Ventilsitz und der Packungshalter sind so ausgeformt, dass sich der Innenhohlraum vom Ventileintritt zum Ventilsitz kontinuierlich verengt, was eine Verdampfung stromauf des Ventilsitzes verhindert. Die daraus resultierende erhöhte Geschwindigkeit übt eine verstärkte laterale Kraft auf den Ventilkolben aus, was aber durch eine veränderte Ausbildung des Packungshalters kompensiert wird und der Ventilkopf und der Ventilkolben optimal geführt und der Strömungsfluss optimal umgelenkt werden.

Eine Kombination der Packungs- bzw. Dichtungshalter, des Ventilkopfes, des Ventilkolbens und des inneren Ventilsitzes können leicht ersetzt werden, während das Regelventil in einer Anlage verbaut ist. Das Verbindungsteil zwischen Ventil und Antrieb ist offen und erlaubt die Teile da hinein zu ziehen und zu demontieren, so dass die Kombination der genannten Teile ausgetauscht werden können. Dazu muß das Verbindungsteil lang und breit genug sein um die Innenteile umzunehmen und die Verbindungselemente zwischen Ventilspindel und Antriebskolben.

Gemäß einer weiteren Ausgestaltung des Regelventils sind die Innenteile, wie innerer und äußerer Ventilsitz, Ventilkolben, Ventilkopf und Packungshalter ausbaubar ohne Abbau des Verbindungsteils bzw. der Laterne und des Hydraulikantriebes. Weiterhin ist das Verbindungsteil bzw. die Laterne zu Reparatur- und Wartungszwecken verlängert und erweitert, um diese Innenteile in die Laterne zuziehbar zu machen und das Verbindungsstück gelöst werden kann und die Innenteile ausgetauscht werden können. Dabei kann der Hydraulikantrieb genutzt werden, um diese Innenteile aus dem Ventilgehäuse zu ziehen.

Die Erfindung bezieht sich auf ein Eckregelventil. Möglich aber auch die Anwendung in Geradsitz- oder Schrägsitzventilen.

Ist das Einzelregelventil ganz geschlossen, liegt keine Beanspruchung vor. Die voll geöffnete Stellung ist ebenfalls akzeptabel, weil dann der Druckabfall und Strömungsgeschwindigkeit des Mediums am niedrigsten sind. Bei einer Regelstellung, bei der das Ventil z.B. 20% offen ist, verschleißt dieses am meisten, weil dann der Druckabfall und die Strömungsgeschwindigkeit sehr hoch sind. Auch ist der Ventilkolben in den Mittelpositionen am wenigsten geführt und damit Vibrationen am meisten ausgesetzt. Im Optimalfall wird das Ventil mal ganz offen und mal ganz geschlossen gefahren. Wenn also ein Regelventil 50% offen wäre, könnte es auch 50% der Betriebszeit voll offen und 50% voll geschlossen gehalten werden. Es gäbe somit 50% der Betriebszeit gar keinen Durchfluss und 50% der Betriebszeit den doppelten Durchfluss, im Durchschnitt jedoch den optimalen Durchfluss. Es wäre aber katastrophal für die die regelnde Anlage, weil in der Zeit, wo das Ventil ganz geschlossen ist, sich im Behälter davor der Mediendruck staut und ausgangsseitig der Druck abfällt. Dies würde zu unakzeptablen Schwankungen in Füllhöhen und Drücken führen. Dabei erfolgt kein gleichmäßiges und optimales Betreiben der Anlage, was aber gerade erreicht werden soll. Ein Regelventil kann also nicht durch ein Auf-Zu-Ventil ersetzt werden.

Die Erfindung bezieht sich somit auch auf ein Doppelventil, welches ein Einzelventil ersetzt.

Bei der Anwendung eines Doppelregelventils besteht dieses aus einem großen Teilventil und mindestens einem kleinen Teilventil, wobei das große Teilventil als justierbares "Auf-Zu"-Kolbenventil und das kleine Teilventil als Regelventil ausgebildet sind. Damit werden der gewünschte Mediendurchfluss erzeugt und darüber hinaus Druckschwankungen ausgeglichen.

Das große Teilventil ist bezüglich des Mediendurchflusses so ausgelegt, dass es den Grundbedarf decken kann. Im Normalfall ist das große Teilventil immer soweit offen, so dass ein Durchfluss vom Eingangstrichter über den Ventilkolben gewährleistet ist. Der Ventilkolben- und Ventilsitzdurchmesser ist so ausgelegt, dass der Grundbedarf durch den Sitz fliessen kann. Der Durchfluss kann geringfügig reduziert werden, indem der Ventilkolben graduell wenig geschlossen wird, bis ca. 90% Kapazität des Mediendurchflusses aufgenommen wird. Dabei darf das große Teilventil nie fast vollständig geschlossen werden, denn das kleine Teilventil kann die benötigte Durchflussmenge nicht aufnehmen.

Während ein Einzelventil 100% des Mediendurchflusses aufnimmt, nimmt das große Teilventil des Doppelregelventils also mindestens 80% und das kleine Teilventil bis zu etwa 20% des Mediendurchflusses auf.

Das kleine Teilventil, das als Regelventil ausgebildet ist, erlaubt die Feinregelung. Somit besteht das Doppelregelventil aus einer Mischung aus "Immer auf"-Kolbenventil-Betrieb und Regelbetrieb. Wird also das große Teilventil im geringfügig um 90% schwankenden "Auf"-Betrieb gefahren, regelt das kleine Teilventil den restlichen Bedarf. Da das kleine Teilventil ca. 20% der Gesamtkapazität bereit stellt, kann ohne Justierung des großen Teilventiles 90% +/- 20% geregelt werden.

Dadurch hat der Anwender einen optimalen Effekt. Das große Teilventil wird gar nicht beschädigt, da es ca 90% geöffnet ist während das kleine Ventil die Hauptverschleißlast trägt.

Das große Teilventil ist optimiert für wenig Verschleiß, aber dafür kann es nicht gut regeln, d.h. es ist also für sich als Regelventil ungeeignet. Das kleine Teilventil ist daher zum Regeln der Durchflussgeschwindigkeit und -menge vorgesehen. Es kann dabei zwar schneller verschleißen, jedoch sind die verschlissenen Teile des kleinen Teilventils leichter und kostengünstiger austauschbar. Die beiden Teilventile sind daher so ausgelegt, dass sie separat gewartet werden können und im Normalfall nur die Verschleißteile im kleinen Teilventil ausgetauscht werden.

Es könnte zwar ein erstes großes Einzelventil und separat ein weiteres kleines billigeres Einzelventil in die Rohrleitung eingesetzt werden. Dabei sind aber beide Ventile nicht erheblich billiger als ein Ventil und es muss zusätzlich eine Änderung der Rohrleitung geschaffen werden.

Sobald der Druckverlust unter den Verdampfungsdruck des Mediums sinkt, verdampft das Medium und die Strömungsgeschwindigkeit erhöht sich in hohem Maße. Wenn dabei im Strömungsmedium Feststoffe mitgeführt werden, werden diese mit beschleunigt und schießen gegen die metallischen Wände der Rohrleitung und zerstört diese. Wenn das Produkt zweier Ventile im rechten Winkel zusammengeführt werden passiert dies besonders am T-Stück.

Um das Zerstören der Rohrleitungswände und schließlich auch des Doppelregelventils zu verhindern, ist gemäß einer Weiterbildung des Doppelregelventils die Längsachse des kleinen Teilventils zur Längsachse des großen Teilventils in einem Winkel von vorzugsweise etwa 20° geneigt ausgebildet. Dabei laufen die Längsachsen der beiden Teilventile so zusammen laufen, dass kein stärkerer Verschleiß entsteht. Dadurch werden die Angangsströme des Mediums ohne große Aufprallkräfte zum Auslasstrichter des Doppelregelventils abgelenkt. Würde ein größerer Winkel zwischen den Achsen der Teilventile verwendet, würden die Abgangsströme, da sie in der Regel feststoffhaltig sind, mit großer Energie gegen die Ventilwände und Rohrleitungswände prallen und diese beschädigen oder gar zerstören.

Weiterhin kann vorgesehen sein, dass das kleine Teilventil als pulsierendes und/oder "Auf/Zu"-Regelventil ausgebildet ist. Aus schon erwähnten Gründen kann das Gesamtventil nicht im beschädigungsminimierenden "Auf/Zu"-Betrieb gefahren werden. Da das große Teilventil aber konstant 90% durchlässt, könnte das kleine Teilventil meist im beschädigungsminimierenden "Auf/Zu"-Betrieb gefahren werden kann und damit minimalem Verschleiß unterzogen werden. Dabei würde der Prozess nur sehr kleinen Druck- und Strömungsgeschwindigkeitsschwankungen unterliegen. Statt zwischen 0 und 200% im Durchfluss zu variieren, würde der Durchfluss nur zwischen 90% und 110% variieren. Durch leichtes Nachjustieren des Kolbens des großen Teilventils kann dies weiter reduziert werden. Dann kann der "Auf/Zu"-Betrieb weiter modifiziert werden, in dem es zum pulsierendem Regelventil verändert werden kann. Im Pulsbetrieb wird es nicht im reinen "Auf/Zu"-Betrieb, sondern in einer Mischung zwischen "Auf/Zu" und regelnd gefahren, wobei die verschleißintensiven Positionen unter 30% Hub vermieden werden und durch ganz geschlossenen (Hub =0%) Position und Pulsen von längeren, z.b. 70% "Auf"-Positionen ersetzt wird.

Ein weiterer Vorteil die Ventile zu teilen, ist, dass der komplizierte, teuer und schwer zu bediendende Hydraulikregelantrieb für das große Teilventil entfallen kann. Für das große Teilventil kann ein einfacher und zuverlässiger, langsam zu betätigender Standard-Hydraulikantrieb verwendet werden. Es wird für das kleinere Teilventile meistens kein Hydraulikantrieb mehr benötigt; ein Pneumatikantrieb würde genügen. Ein Hydraulikregelantrieb ist viel schwieriger und teurer zu betreiben.

Des Weiteren ist der Einlasstrichter derart zweigeteilt, dass keine Querschnittsvergrößerungen vor den Ventilsitzen erfolgt. Damit werden Kavitation und Verdampfung des Mediums vermieden. Darüber hinaus kann durch die Teilung des Einlasses das kleinere Teilventil mit einem leicht zu steuerndem Pneumatikantrieb ausgerüstet werden.

Die Verdampfung, die stromabwärts zwangsläufig erfolgt und zu Beanspruchungen der Ventilsitze und Trichter führt, richtet im jeweiligen Abgang ihre Zerstörung zum Großteil nur am jeweiligen Teilventilabgang an und nicht am anderen Teilventil. Dabei soll die Zerstörung durch Kavitation und Verschleiß vor allem im großen Teilventil weitgehend vermieden wird, während der verbleibende Rest überwiegend im kleinen Teilventil erfolgt.

Gemäß einer weiteren Ausgestaltung des Doppelregelventils ist das große Teilventil derart ausgebildet, dass dieses mindestens 80% des maximalen Durchflusses ohne Regelung aufnimmt, jedoch mit ca. 20% justierbar ist. Darüber hinaus ist das kleine Teilventil derart ausgebildet ist, dass dieses bis zu ca. 20% des maximalen Durchflusses mit Regelung aufnimmt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand von Ausführungsbeispielen, die in den Zeichnungen dargestellt sind, näher beschrieben. Es zeigen:
- Fig. 1: eine Schnittansicht eines vollständigen Eckregelventils als Einzelventil in einer ersten Ausführungsform,
- Fig. 2: eine Schnittansicht eines vollständigen Eckregelventils als Einzelventil in einer zweiten Ausführungsform,
- Fig. 3: einen vergrößerten Ausschnitt als Schnittansicht des Ventilsitzbereiches des Eckregelventils als Einzelventil in einer ersten Ausführungsform,
- Fig. 4: einen vergrößerten Ausschnitt als Schnittansicht des Ventilsitzbereiches des Eckregelventils als Einzelventil in einer zweiten Ausführungsform,
- Fig. 5: einen vergrößerten Ausschnitt als Schnittansicht des Ventilsitzbereiches des Eckregelventils als Einzelventil in einer dritten Ausführungsform,
- Fig. 6: einen vergrößerten Ausschnitt als Schnittansicht des Auslasstrichters des Eckregelventils als Einzelventil,
- Fig. 7: einen vergrößerten Ausschnitt als Schnittansicht des äußeren Ventilsitzes des Eckregelventils als Einzelventil in einer ersten Ausführungsform,
- Fig. 8: einen vergrößerten Ausschnitt als Schnittansicht des äußeren Ventilsitzes des Eckregelventils als Einzelventil in einer zweiten Ausführungsform,
- Fig. 9: eine Perspektivansicht eines Doppelregelventils,
- Fig. 10: eine Seitenansicht im Teilschnitt A-A des Doppelregelventils gemäß Fig. 9 und
- Fig. 11: eine Teilseitenansicht des Doppelregelventils gemäß Fig. 10.

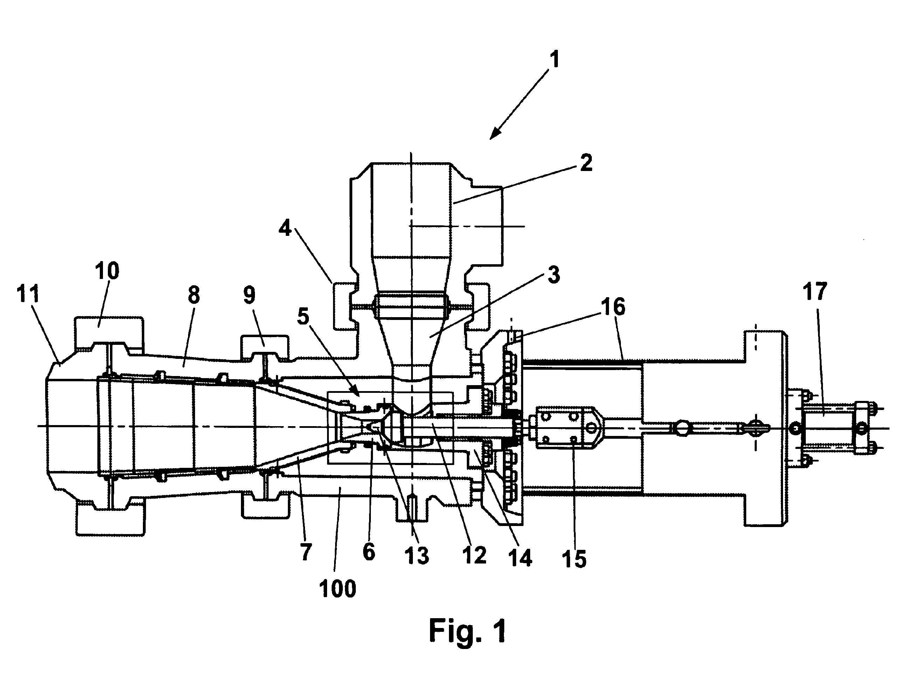

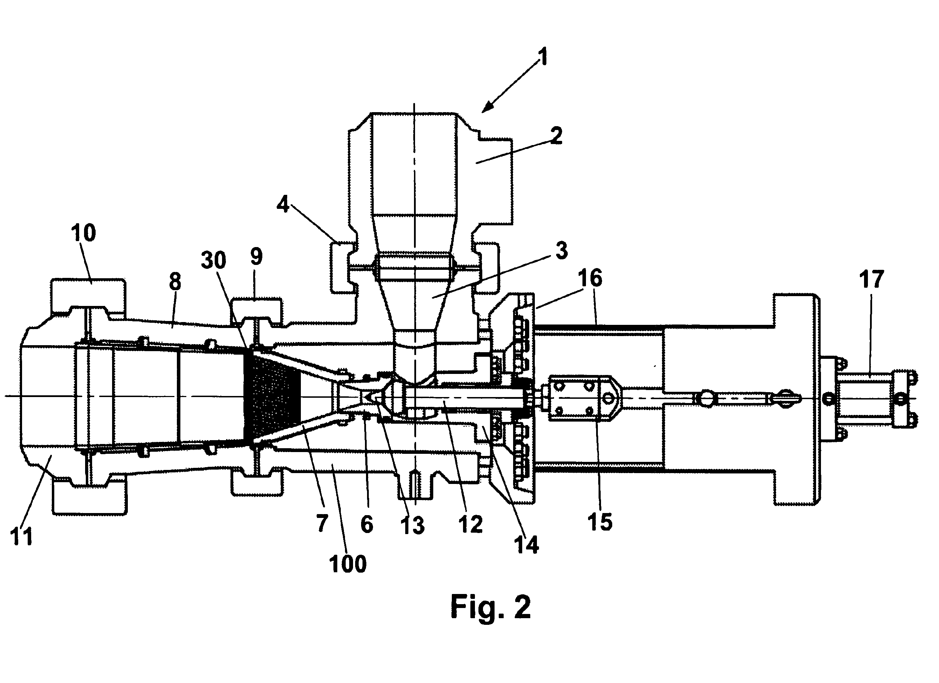

Das Regelventil 1 mit Ventilgehäuse 100 gemäß den Fig. 1 und 2 ist als Einzelventil ausgebildet und besteht in seinen Hauptteilen aus einer Medienzuführung 2 zum Transport eines erosiven und korrosiven Mediums innerhalb einer nicht näher dargestellten Anlage, beispielsweise eines Abscheiders. Der Medienzuführung 2 schließt sich im Ventilgehäuse 100 ein Einlasstrichter 3 an, der durch eine Klammer- oder Flanschverbindung 4 mit der Medienzuführung 2 verbunden ist. Dem Einlasstrichter 3 ist ein Ventilsitz nachgeordnet, der im Wesentlichen aus einem Ventilsitzhalter 5, inneren Ventilsitz 6 und einem äußeren Ventilsitz 7 besteht, wobei Letzterer dem inneren Ventilsitz 6 nachgeordnet ist. Dem äußeren Ventilsitz 7 schließt sich ein Auslasstrichter 8 an, der mittels einer Klammer 9 mit dem Ventilgehäuse 100 und damit dem äußeren Ventilsitz 7 verbunden ist. Dem Auslasstrichter 8 folgt ein mittels einer weiteren Klammer 10 verbundener Anschlussflansch 11 für eine nicht gezeigte Rohrleitung.

Im inneren Ventilsitz 6 ist ein Ventilkolben 12 angeordnet, an dessen zum Ventilsitz 6 gerichteten Ende ein Ventilkopf 13 ausgebildet ist. Der Ventilkolben 12 wird in einer Packungshaltereinheit bzw. Buchse 14 geführt, die mit einem entgegengesetzt der Strömungsrichtung des Mediums angeordneten Verbindungsstück bzw. Spindel 15 verbunden ist, das sich in einem Verbindungsteil 16 erstreckt. Dieses Verbindungsteil wird wegen seiner Bauform auch als "Laterne" bezeichnet. Das verbindungsteil 16 wiederum ist mit einem Hydraulikantrieb 17 zum Betätigen des Regelventils 1 verbunden.

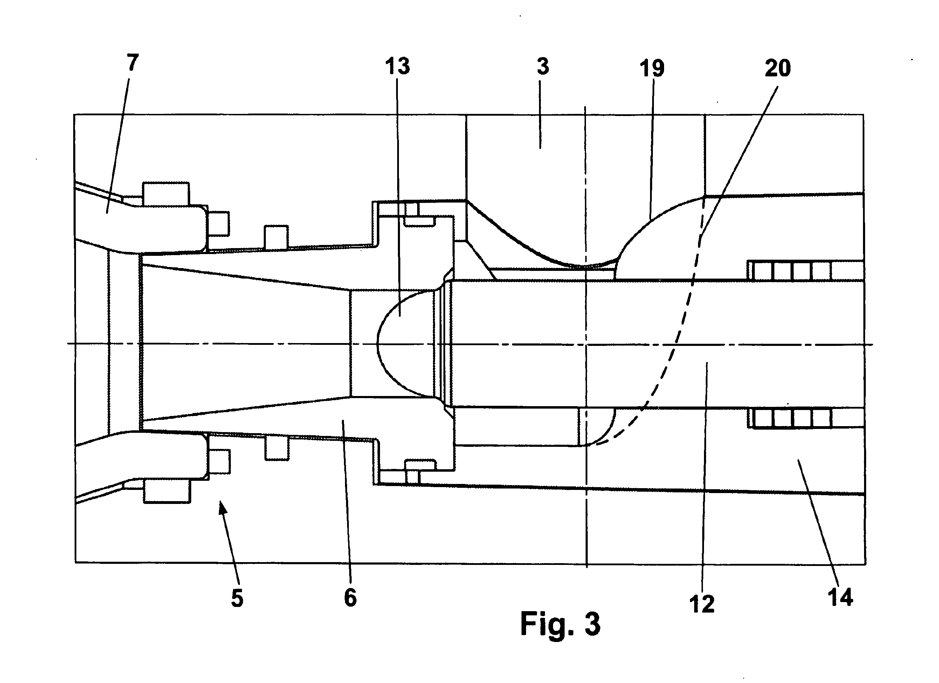

Der innere Ventilsitz 6 besteht aus einem verkürzten Einsatzkörper aus Wolframcarbid, der in Strömungsrichtung sich leicht konisch verjüngend ausgebildet und gegen den sich ebenfalls leicht konisch verjüngenden Ventilsitzhalter 5 verpresst ist, wie insbesondere in Fig. 3 gezeigt.

Die äußeren Teile des Regelventils 1, also ausgenommen der Ventilsitze 6 und 7 mit dem Ventilkolben 12 und dem Ventilkopf 13, bestehen im Wesentlichen aus Stahl bzw. Edelstahl.

Bei der ersten Ausführungsform des Ventilsitzbereiches 6 des Regelventils 1 gemäß Fig. 3 sind der Ventilkolben 12 und der Ventilkopf 13 einstückig ausgebildet und bestehen aus massivem Wolframcarbid. Der Ventilkopf 13 besitzt eine verkürzte, etwa halbkreisförmige Kugelkontur, die beim Schließen des Regelventils 1 teilweise in den als sich leicht verjüngenden Einsatzkörper ausgebildeten inneren Ventilsitz 6 eindringt.

Mittig im Übergang vom Einlasstrichter 3 zum Ventilsitz 5 ragt eine Wandung 19 um den Ventilkolben 12 herum in den inneren Ventilsitz 6. Der Strömungsdurchgang in diesem Bereich wird durch eine etwa halbkreisförmige Strömungskontur 20 gebildet, die strichliert dargestellt ist, da sie in der Seitenansicht nicht sichtbar ist.

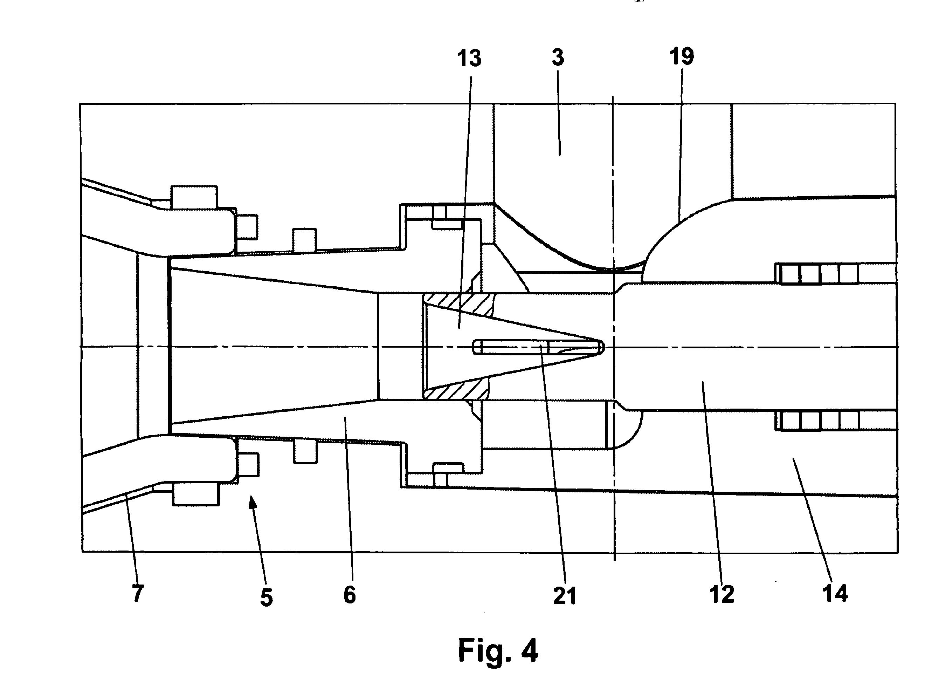

Gemäß der zweiten Ausführungsform des Ventilsitzbereiches 6 des Regelventils 1 gemäß Fig. 4 besitzt der Ventilkopf 13 eine Tassenform mit mehreren Schlitzen 21, wobei der hohle Innenteil des Ventilkopfes 13 stromabwärts gerichtet ist. Die Schlitze liegen sich diametral gegenüber, so dass in Fig. 4 nur einer der Schlitze 21 zu sehen ist. Die Schlitze 21 sind in Bewegungsrichtung des Ventilkolbens 12 in die Außenwandung des tassenförmigen Ventilkopfes 13 verteilt eingebracht.

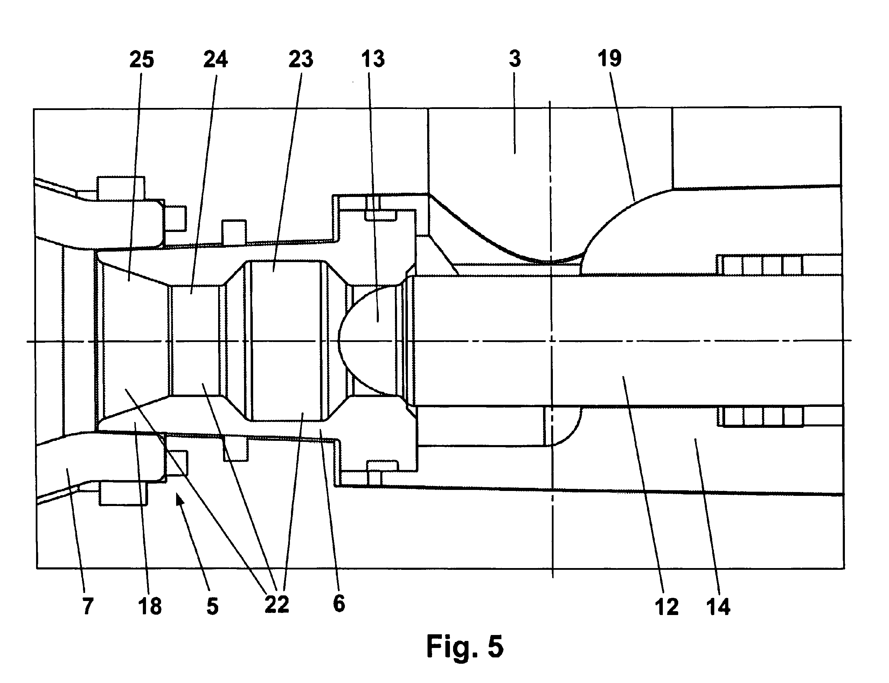

In der dritten Ausführungsform des Ventilsitzbereiches 6 des Regelventils 1 gemäß Fig. 5 sind im Einsatzkörper 18 des inneren Ventilsitzes 6 mehrere Druckminderungsstufen 22 ausgebildet, nämlich in Strömungsrichtung des Mediums eine Erweiterung 23, eine Verengung 24 und wiederum eine Erweiterung 25, in denen der Druck des durch das Regelventil 1 strömenden Mediums im geöffnetem Zustand abgebaut wird.

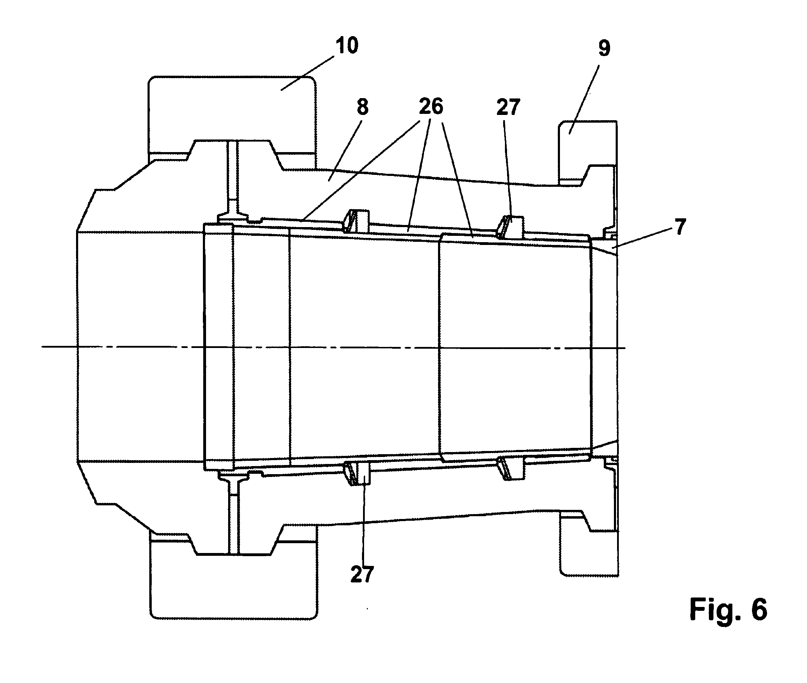

Fig. 6 zeigt einen in Strömungsrichtung des Mediums sich erweiternden äußeren Auslasstrichter 8 mit einer Auskleidung 26 aus Wolframcarbid, welche durch zwei getrennte schräg gestellte Radialfedern 27 aus Inconel gegen die Trichterwandung verspannt ist.

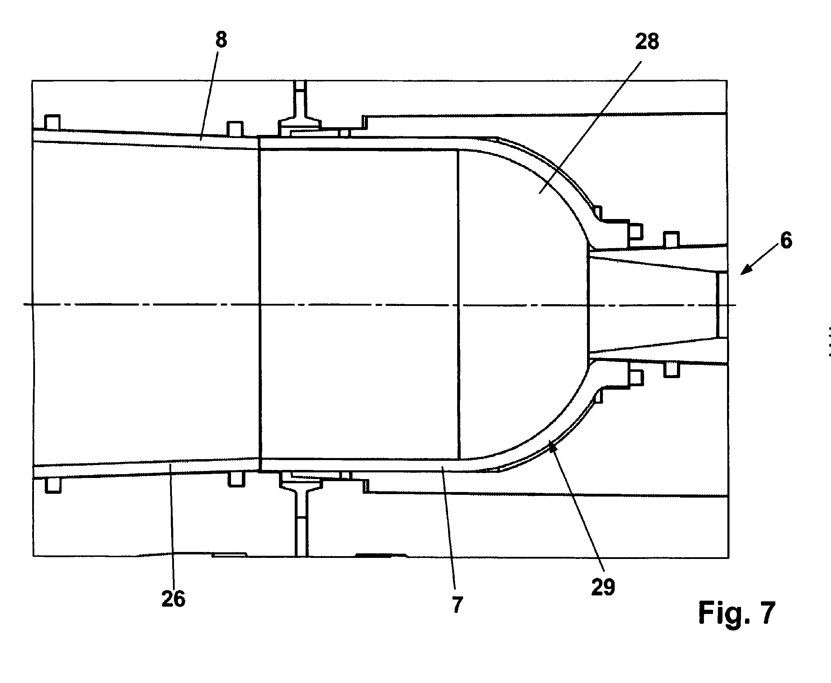

In Fig. 7 ist ein äußerer Ventilsitz 7 des Regelventils 1 in einer ersten Ausführungsform dargestellt, welcher eine dem Ventilsitz 6 nachgeordnete Druckminderungsstufe 28 in Form einer sich in Strömungsrichtung des Mediums erstreckenden rapiden Erweiterung aufweist. Dabei erfolgt der unmittelbare Übergang vom Ventilsitz 6 in den Auslasstrichter 8 schalenförmig mit kleinem Radius.

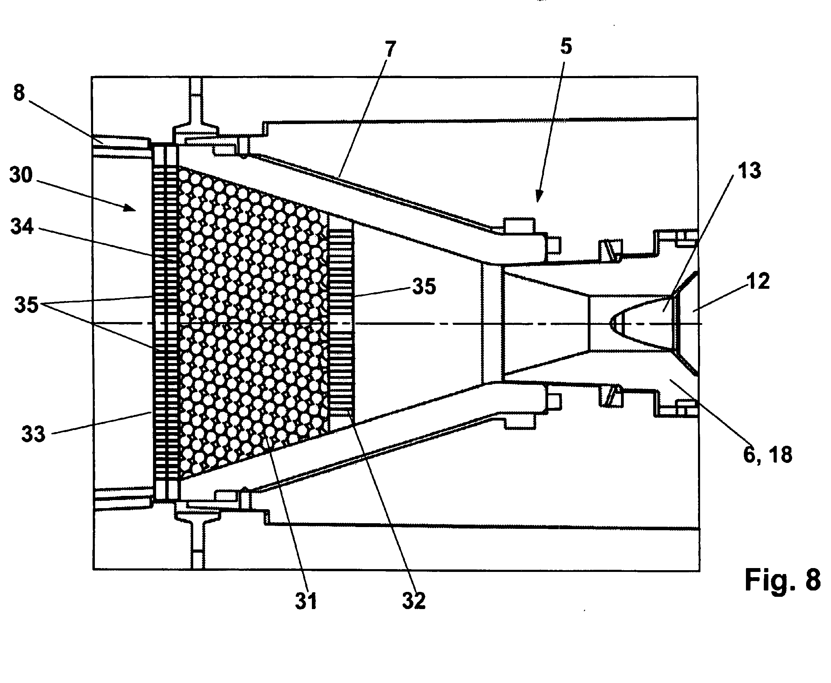

Gemäß Fig. 8 ist im äußeren Ventilsitz 7 ein Bett 30 aus einer Vielzahl von Wolframcarbidkugeln 31 eingebracht. Das Bett 30 aus Wolframcarbidkugeln 31 wird strömungseingangsseitig und strömungsausgangsseitig durch Siebplatten 32, 33, 34 begrenzt. Die Löcher 35 der Siebplatten 32 und 34 besitzen eine quadratische Form, damit sich einerseits die Wolframcarbidkugeln 31 an die Löcher 35 anlegen können und dennoch das Medium durch die Löcher 35 strömen kann. Daher sind die Wolframcarbidkugeln 31 größer als die Löcher 35.

Strömungsausgangsseitig sind zwei hintereinander angeordnete Siebplatten 33 und 34 vorgesehen. Die erste Siebplatte 34 besteht aus massiven Wolframcarbid und die zweite Siebplatte 33 aus warmfesten Stahl. Die Löcher 35 der zweiten Siebplatte 33 sind hinter den Löchern 35 der ersten Siebplatte 34 angeordnet, um einen Strömungsdurchgang für das Medium zu gewährleisten.

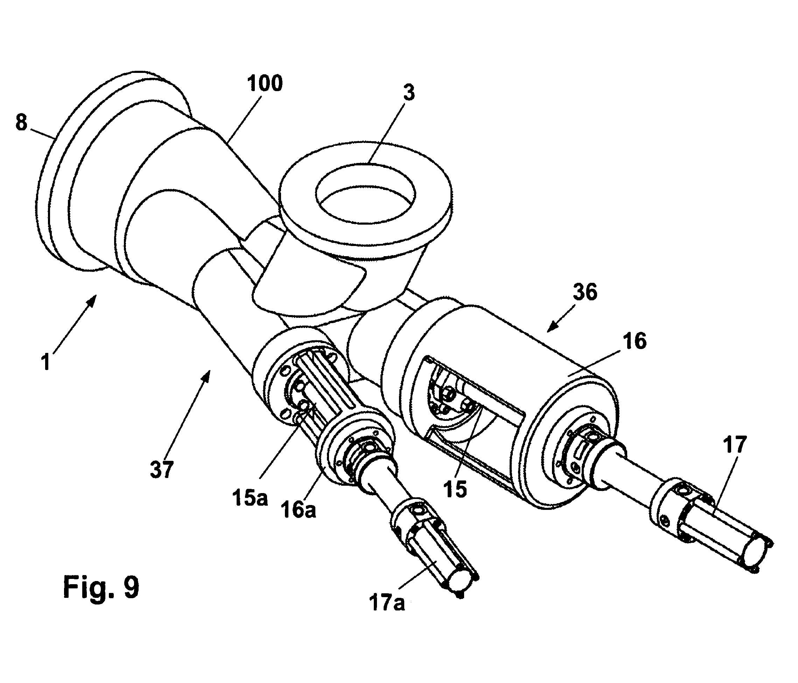

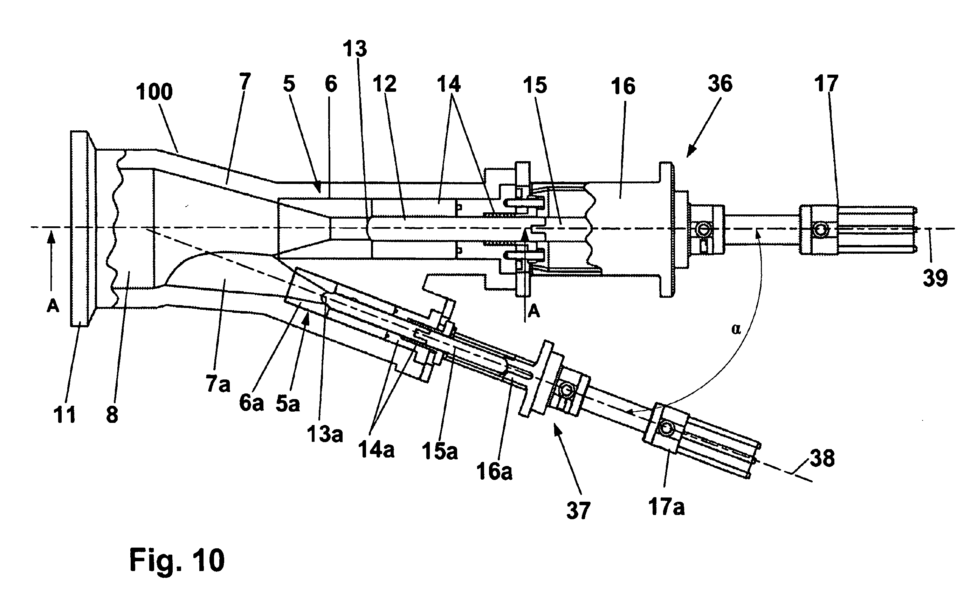

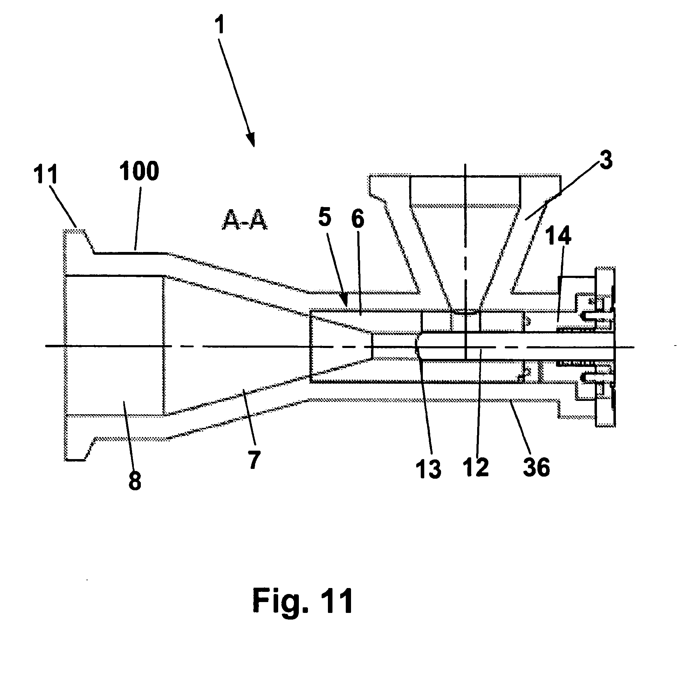

Das in den Fig. 9 bis 11 gezeigte Doppelregelventil 1 weist ein Ventilgehäuse 100 auf und besteht in seinen Hauptteilen aus einem großen Teilventil 36 und einem kleinen Teilventil 37 im gleichen Ventilgehäuse 100. Während das große Teilventil 36 als justierbares "Auf/Zu"- Kolbenventil vorgesehen ist, dient das kleine Teilventil 37 als Regelventil.

Die Bezugsziffern der für das zuvor erläuterte Einzelventil beschriebenen Bauteile entsprechen denen des großen Teilventils 36 und denen des kleinen Teilventils 37, wobei den Bezugsziffern des kleinen Teilventils 37 jeweils ein "a" hinzugefügt ist, sofern diese Bauteile gleich sind. Die den Bauteilen des Einzelventils gleichen Bauteile des Doppelregelventils werden nicht nochmals beschrieben, vielmehr wird auf die Ausführungen zum zuvor erläuterten Einzelregelventil verwiesen.

Am Ventilgehäuse 100 ist ein für die beide Teilventile 36 und 37 gemeinsamer Einlasstrichter 3 angeordnet.

Die Längsachse 38 des kleinen Teilventils 37 ist zur Längsachse 39 des großen Teilventils 36 in einem Winkel α von vorzugsweise etwa 20° geneigt ausgebildet.

### Liste der Bezugszeichen

- 1: Regelventil
- 100: Ventilgehäuse
- 2: Medienzuführung
- 3: Einlasstrichter
- 4: Klammer
- 5: Ventilsitzhalter
- 6: Innerer Ventilsitz
- 7: Äußerer Ventilsitz
- 8: Auslasstrichter
- 9: Klammer
- 10: Klammer
- 11: Anschlussflansch
- 12: Ventilkolben
- 13: Ventilkopf
- 14: Packungshalter, Buchse
- 15: Verbindungsstück, Spindel
- 16: Verbindungsteil/Laterne
- 17: Hydraulikantrieb
- 18: Einsatzkörper
- 19: Wandung
- 20: Strömungskontur
- 21: Schlitz
- 22: Druckminderungsstufe
- 23: Erweiterung
- 24: Verengung
- 25: Erweiterung
- 26: Auskleidung
- 27: Tellerfeder
- 28: Druckminderungsstufe
- 29: Erweiterung
- 30: Bett
- 31: Wolframcarbidkugeln
- 32: Siebplatte
- 33: Siebplatte
- 34: Siebplatte
- 35: Löcher
- 36: Großes Teilventil
- 37: Kleines Teilventil
- 38: Längsachse
- 39: Längsachse
- α: Winkel

## Patentansprüche

1. Regelventil (1), insbesondere Eckregelventil und Doppelregelventil, auch als Gerad- und Schrägsitzventil, für extreme Regelanwendungen mit erosiven und korrosiven Medien bei Temperaturen über 500°C und Druckabfälle über 100 bar, vorzugsweise zum Ablassen bzw. Herunterregulieren für Hochdruck-Heißabscheider, Mitteldruck-Heißabscheider und Vakuumdestillationskolonnen, insbesondere für Hydrierung und davon insbesondere für die Kohleverflüssigung, mit einem Einlasstrichter (3), einem mit Wolframcarbid ausgekleideten Auslasstrichter (8), dazwischen angeordneten Ventilsitzen (6,7) und einem mit einem Regelventilkopf (13) versehenen Ventilkolben (12), wobei der Ventilsitz (6, 7) und der Ventilköpf (13) aus massivem Wolframcarbid bestehen und der Ventilkolben (12) und der Ventilkopf (13) einteilig ausgebildet sind, **dadurch gekennzeichnet, dass**
- der Ventilkolben (12) und der Ventilkopf (13) aus Wolframcarbid bestehen,
- der Ventilkopf (13) vorzugsweise eine verkürzte, also etwa halbkreisförmige Kugelregelkontur besitzt oder
- der Ventilkopf (13) eine Tassenform mit einem oder mehreren Schlitzen (21) aufweist, wobei der hohle Innenteil stromabwärts gerichtet ist,
- der Ventilsitz (6, 7) zumindest aus einem inneren Ventilsitz (6) und einem äußeren Ventilsitz (7) besteht,
- mittig im Übergang vom Einlasstrichter (3) zum inneren Ventilsitz (6) eine Wandung (19) um den Ventilkolben (12) herum schützend in den Gehäusehohlraum ragt und der Strömungsdurchgang um die Wandung (19) und den Ventilholben (12) durch eine etwa halbkreis förmige Strömungskontur (20) gebildet ist,
- ein Ventilgehäuse (100), der innere Ventilsitz (6) und ein Packungshalter (14), in dem der Ventilkolben (12) geführt wird, ausgebildet sind und gegebenenfalls so ausgeformt sind, dass sich der Innenhohlraum vom Ventileintritt zum inneren Ventilsitz (6) kontinuierlich verengt, was eine Verdampfung stromauf des inneren Ventilsitzes (6) verhindert,
- gegebenenfalls eine oder mehrere Druckminderungsstufen (22,28) im Ventilsitz (6,7) und/oder im Auslasstrichter (8) ausgebildet sind,
- gegebenenfalls die Auskleidung (26) im Auslasstrichter (8) und/oder des Ventilsitzes (6,7) durch mindestens eine Tellerfeder (27) gegen die Trichterwandung bzw. den Ventilsitzhalter (5) verspannt und/oder mittels einer Lederumwicklung gegen Vibration geschützt ist,
- am Ende des äußeren Ventilsitzes (7) und/oder im Auslasstrichter (8) bei Bedarf ein Bett (30) aus Wolframcarbidkugeln (31) als alternative Druckabbaustufe ausgebildet ist.

2. Regelventil nach Anspruch 1, **dadurch gekennzeichnet,**
**dass** die Schlitze (21), wenn Bestandteil des Regelventils, in Bewegungsrichtung des Ventilkolbens (12) in die Außenwandung des tassenförmigen Ventilkopfes (13) verteilt eingebracht sind.

3. Regelventil nach Anspruch 1, **dadurch gekennzeichnet,**
**dass** der hohle Innenteil des tassenförmigen Ventilkopfes (13), wenn Bestandteil des Regelventils, konisch mit demselben Winkel wie die Erweiterung des inneren Ventilsitzes (6) ausgebildet ist.

4. Regelventil nach Anspruch 1, **dadurch gekennzeichnet,**
**dass** die mehreren Druckminderungsstufen (22, 28), wenn Bestandteil des Regelventils, wechselweise sich erweiternd und verengend hintereinander in Strömungsrichtung des Mediums im Ventilsitz (6,7) und/oder im Auslasstrichter (8) angeordnet sind.

5. Regelventil nach Anspruch 1, **dadurch gekennzeichnet,**
**dass** eine dem Ventilsitz (6,7) nachgeordnete Druckminderungsstufe (28), wenn Bestandteil des Regelventils, im Auslasstrichter (8) in Strömungsrichtung des Mediums eine rapide Erweiterung (29) aufweist, wobei der unmittelbare Übergang vom Ventilsitz (6,7) in den Auslasstrichter (8) vorzugsweise schalenförmig mit kleinem Radius erfolgt.

6. Regelventil nach Anspruch 1, **dadurch gekennzeichnet,**
**dass** die Tellerfeder (27) als schräg gestellte Radialfeder ausgebildet ist und aus Inconel besteht.

7. Regelventil nach Anspruch 1, **dadurch gekennzeichnet,**
**dass** das Bett (30) aus Wolframcarbidkugeln (31), wenn Bestandteil des Regelventils, strömungseingangsseitig und strömungsausgangsseitig durch Siebplatten (32,33,34) begrenzt ist, wobei die Löcher (35) der Siebplatten (32,34) vorzugsweise eine quadratische Form aufweisen.

8. Regelventil nach Anspruch 7, **dadurch gekennzeichnet,**
**dass** strömungsausgangsseitig zumindest zwei hintereinander angeordnete Siebplatten (33,34) vorgesehen sind, wobei die erste Siebplatte (34) aus massiven Wolframcarbid und die zweite Siebplatte (33) aus warmfesten Stahl bestehen und die Löcher (35) der zweiten Siebplatte (34) genau hinter den Löchern (35) der ersten Siebplatte (33) angeordnet oder die Löcher (35) der ersten Siebplatte (34) geringfügig kleiner sind als die Löcher (35) der zweiten Siebplatte (33) ausgebildet sind, wobei sich die Löcher (35) der zweiten Siebplatte (33) konisch erweitern.

9. Regelventil nach Anspruch 1, **dadurch gekennzeichnet, dass** ein Ventilsitzhalter (5), als Bestandteil des Ventilsitzes, und der Packungshalter (14) in Strömungsrichtung sich leicht konisch verjüngend ausgebildet sind, die gegen den sich ebenfalls leicht konisch verjüngenden Ventilgehäuse (100) verpresst sind.

10. Regelventil nach Anspruch 1, **dadurch gekennzeichnet, dass** kurze Packungshalter (14) oder ähnliche Dämpfungseinrichtung zwischen den Wolframcarbid- oder Keramikteilen und dem Stahlkörper und den Ventilsitzhalteteilen, wenn Bestandteil des Regelventils, vorgesehen sind.

11. Regelventil nach Anspruch 1, **dadurch gekennzeichnet, dass** der Pachungshalter (14) mit einem Verbindungsstück (15) verbunden ist, das sich in einem Verbindungsteil bzw. Laterne (16) erstrecht, das mit einem Hydraulikantrieb (17) verbunden ist, wobei die Innenteile (5, 6, 7, 12, 13? 14) ausbaubar sind ohne Abbau des Verbindungsteils bzw. der Laterne (16) und des Hydraulikantriebes (17).

12. Regelventil nach Anspruch 11, **dadurch gekennzeichnet, dass** das Verbindungsteil bzw. die Laterne (16) zu Reparatur- und Wartungszwecken verlängert und erweitert ist.

13. Regelventil nach Anspruch 12, **dadurch gekennzeichnet, dass** der Hydraulikantrieb (17) genutzt werden kann, um die Innenteile (5,6,7,12,13 und 14) aus dem Ventilgehäuse (100) zu ziehen.

14. Regelventil nach Anspruch 1, **dadurch gekennzeichnet, dass** das Wolframcarbid mindestens etwa 10% Bindemittel, nämlich Kobalt oder Nickel, enthält und eine mittlere Korngröße aufweist, wobei das Bindemittel durch eine spezielle, härtende Beschichtung geschützt ist.

15. Doppelregelventil, **dadurch gekennzeichnet, dass** das Doppelregelventil aus einem großen Teilventil (36) und mindestens einem kleinen Teilventil (37) besteht, wobei das große Teilventil (36) als justierbares "Auf-Zu"-Kolbenventil und das kleine Teilventil (37) als Regelventil nach einem der Ansprüche 1 bis 14 ausgebildet sind.

16. Regelventil nach Anspruch 15, **dadurch gekennzeichnet, dass** die Längsachse des kleinen Teilventils (37) zur Längsachse des großen Teilventils (36) in einem Winkel (α) von vorzugsweise etwa 20° geneigt ausgebildet ist.

17. Regelventil nach Anspruch 15, **dadurch gekennzeichnet, dass** das kleine Teilventil (37) als pulsierendes und/oder "Auf/Zu"-Regelventil ausgebildet ist.

18. Regelventil nach Anspruch 15, **dadurch gekennzeichnet, dass** der Einlasstrichter (3) derart zweigeteilt ist, dass keine Querschnittsvergrößerungen vor den Ventilsitzen (6,6a) erfolgt.

19. Regelventil nach Anspruch 15, **dadurch gekennzeichnet, dass** das große Teilventil (36) derart ausgebildet ist, dass dieses mindestens 80% des maximalen Durchflusses ohne Regelung aufnimmt, jedoch mit ca. 20% justierbar ist.

20. Regelventil nach Anspruch 15, **dadurch gekennzeichnet, dass** das kleine Teilventil (37) derart ausgebildet ist, dass dieses bis zu ca. 20% des maximalen Durchflusses mit Regelung aufnimmt.

## Claims

1. Control valve (1), in particular angle control valve and double control valve, also as a seat valve and angle seat valve, for extreme control applications with erosive and corrosive media at temperatures of over 500°C and pressure drops of over 100 bar, preferably for draining or down-regulating for high-pressure hot separators, medium-pressure hot separators and vacuum distillation columns, in particular for hydrogenation, and particularly for coal liquefaction, with an inlet funnel (3), an outlet funnel (8) lined with tungsten-carbide, valve seats (6, 7) arranged between them, and a valve piston (12) provided with a control valve head (13), whereby the valve seat (6, 7) and the valve head (13) consist of solid tungsten carbide and the valve piston (12) and the valve head (13) are made in one piece,
**characterised in that**
- the valve piston (12) and the valve head (13) consist of tungsten carbide,
- the valve head (13) preferably has a shortened, approximately semicircular ball control contour,
- the valve head (13) has a cup shape with one or several slits (21), whereby the hollow inner part is directed downstream,
- the valve seat (6, 7) at least consists of a inner valve seat (6) and an external valve seat (7),
- centred in the transition from the inlet funnel (3) to the valve seat (6) a wall (19) around the valve piston (12) protectively projects into the housing cavity, and the flow passage is formed around the wall (19) and the valve piston (12) by an approximately semicircular flow contour (20),
- a valve housing (100), the inner valve seat (6) and a package holder (14), **in that** the valve piston (12) is guided, are formed and designed, if necessary, so that the interior cavity continually narrows from the valve inlet to the inner valve seat (6), which prevents evaporation upstream of the inner valve seat (6),
- if necessary, one or several pressure reduction levels (22, 28) are formed in the valve seat (6, 7) and/or in the outlet funnel (8),
- if necessary, the lining (26) in the outlet funnel (8) and/or the valve seat (6, 7) is braced against the funnel wall or the valve seat support (5) by means of at least one disc spring (27), and/or is protected from vibrations by means of a leather wrapping,
- at the end of the external valve seat (7) and/or in the outlet funnel (8), if necessary, a bed (30) of tungsten carbide balls (31) is designed as an alternative pressure reduction level.

2. Control valve according to claim 1, **characterised in that** the slits (21), if part of the control valve, are distributed in the exterior wall of the cup-shaped valve head (13) in the direction of movement of the valve piston (12).

3. Control valve according to claim 1, **characterised in that** the hollow inner part of the cup-shaped valve head (13), if part of the control valve, is designed conically with the same angle as the expansion of the inner valve seat (6).

4. Control valve according to claim 1, **characterised in that** the several pressure reduction levels (22, 28), if part of the control valve, are arranged alternately expanding and constricting one after the other in the direction of flow of the medium in the valve seat (6, 7), and/or in the outlet funnel (8).

5. Control valve according to claim 1, **characterised in that** one pressure reduction level (28), if part of the control valve, subordinate to the valve seat (6, 7), has a rapid expansion (29) in the outlet funnel (8) in the direction of flow of the medium, whereby the direct transition from the valve seat (6, 7) into the outlet funnel (8) is preferably shell-like with a small radius.

6. Control valve according to claim 1, **characterised in that** the disc spring (27) is designed as a slightly inclined radial spring and consists of Inconel.

7. Control valve according to claim 1, **characterised in that** the bed (30) of tungsten carbide balls (31), if part of the control valve, is bordered on the inlet and outlet side by screening plates (32, 33, 34), whereby the holes (35) of the screening plates (32, 34) preferably have a quadratic form.

8. Control valve according to claim 7, **characterised in that** on the outlet side, at least two screening plates (33, 34) are arranged one behind the other, whereby the first screening plate (34) consists of solid tungsten carbide, and the second screening plate (33) consists of heat-resistant steel, and the holes (35) of the second screening plate (34) are arranged directly behind the holes (35) of the first screening plate (33), or the holes (35) of the first screening plate (34) are formed slightly smaller than the holes (35) of the second screening plate (33), whereby the holes (35) of the second screening plate (33) expand conically.

9. Control valve according to claim 7, **characterised in that** a valve seat support (5), as part of the valve seat, and the package holder (14) are formed tapering slightly conically in the direction of flow, which are pressed against the valve housing (100), which also tapers slightly conically.

10. Control valve according to claim 1, **characterised in that** the short package holder (14) or a similar damping device is provided between the tungsten carbide or ceramic parts and the steel body and the valve seat support parts, if part of the control valve.

11. Control valve according to claim 1, **characterised in that** the package holder (14) is connected to a connection piece (15), which extends to a connecting element or lantern (16), which is connected to a hydraulic drive (17), whereby the internal parts (5, 6, 7, 12, 13, 14) can be removed without dismantling the connection part or the lantern (16) and the hydraulic drive (17).

12. Control valve according to claim 11, **characterised in that** the connection part or the lantern (16) is lengthened and expanded for repair and maintenance purposes.

13. Control valve according to claim 12, **characterised in that** the hydraulic drive (17) can be used to draw the internal parts (5, 6, 7, 12, 13, and 14) out of the valve housing (100).

14. Control valve according to claim 1, **characterised in that** the tungsten carbide contains at least 10% binding agent, namely cobalt or nickel, and has an average particle size, whereby the binding agent is protected by a special hardening coating.

15. Double control valve, **characterised in that** the double control valve consists of a large valve part (36) and a small valve part (37), whereby the large valve part (36) is formed as an adjustable "on-off" piston valve, and the small valve part (37) is formed as a control valve according to one of the claims 1 to 14.

16. Control valve according to claim 15, **characterised in that** the longitudinal axis of the small valve part (37) is inclined to the longitudinal axis of the large valve part (36) at an angle (α) of preferably about 20°.

17. Control valve according to claim 15, **characterised in that** the small valve part (37) is designed as a pulsing and/or "on/off" control valve.

18. Control valve according to claim 15, **characterised in that** the inlet funnel (3) is split into two parts, in a way that there are no cross-sectional enlargements in front of the valve seats (6, 6a).

19. Control valve according to claim 15, **characterised in that** the large valve part (36) is designed in such a way that it takes at least 80% of the maximal flow without regulation, but which is adjustable by about 20%.

20. Control valve according to claim 15, **characterised in that** the small valve part (37) is designed in such a way that this takes up to about 20% of the maximal flow with regulation.

## Revendications

1. Soupape de régulation (1), en particulier soupape de régulation angulaire et soupape de régulation double, servant aussi de soupape à siège droit et oblique, pour avec des fluides érosifs et corrosifs à des températures supérieures à 500°C et des chutes de pression supérieures à 100 bars, de préférence pour évacuer ou abaisser les valeurs avec un séparateur chaud haute pression, séparateur chaud moyenne pression et colonnes de distillation sous vide, en particulier pour l'hydratation et plus particulièrement pour la liquéfaction carbone, possédant une trémie d'admission (3), une trémie de sortie (8) revêtue de carbure de tungstène, sièges de soupape (6, 7) disposés entre elles, et un piston de soupape (12) pourvu d'une tête de soupape de régulation (13), où le siège de soupape (6, 7) et la tête de régulation (13) se composent de carbure de tungstène massif et le piston de soupape (12) et la tête de régulation (13) sont constitués d'un seul tenant, **caractérisée en ce que**
- le piston de soupape (12) et la tête de régulation (13) se composent de carbure de tungstène,
- la tête de régulation (13) possède de préférence un contour de régulation à billes raccourci, donc légèrement en demi-cercle ou bien
- la tête de régulation (13) présente une forme de tasse munie d'une ou de plusieurs fentes (21), où la partie interne creuse est dirigée vers le bas,
- le siège de soupape (6, 7) se compose au moins d'un siège de soupape interne (6) et d'un siège de soupape externe (7),
- une paroi (19) pénètre dans la cavité de logement, au centre dans la transition de la trémie d'admission (3) au siège de soupape interne (6), tout autour du piston de soupape (12) avec un effet de protection et le passage du flux est constitué autour de la paroi (19) et du piston de soupape (12) à travers un contour d'écoulement (20) légèrement en demi-cercle,
- un logement de soupape (100), le siège de soupape interne (6) et un support de joints (14), dans lequel est guidé le piston de soupape (12), sont constitués et le cas échéant formés de telle façon que la cavité interne rétrécit de manière continue de l'entrée de soupape vers le siège de soupape interne (6), ce qui empêche toute évaporation en amont du siège de soupape interne (6),
- le cas échéant un ou plusieurs étages de réduction de pression (22, 28) sont constitués dans le siège de soupape (6, 7) et/ou dans la trémie de sortie (8),
- le cas échéant le revêtement (26) est tendu dans la trémie de sortie (8) et/ou celui du siège de soupape (6, 7) par au moins un ressort Belleville (27) contre la paroi de trémie ou le support de siège de soupape (5) et/ou protégé contre les vibrations à l'aide d'un entourage de cuir,
- à l'extrémité du siège de soupape externe (7) et/ou dans la trémie de sortie (8) en cas de besoin un lit (30) en billes de carbure de tungstène (31) comme étage de baisse de pression alternative.

2. Soupape de régulation selon la revendication 1, **caractérisée en ce que** les fentes (21), si elles font partie de la soupape de régulation, sont réparties dans la direction de marche du piston de soupape (12) dans la paroi extérieure de la tête de régulation (13) en forme de tasse.

3. Soupape de régulation selon la revendication 1, **caractérisée en ce que** la partie interne creuse de la tête de régulation en forme de tasse (13), si elle fait partie de la soupape de régulation, est de forme conique avec le même angle que l'extension du siège de soupape interne (6).

4. Soupape de régulation selon la revendication 1, **caractérisée en ce que** les plusieurs étages de réduction de pression (22, 28), s'ils font partie de la soupape de régulation, sont disposés en s'élargissant et en rétrécissant de manière alternée l'un derrière l'autre dans le sens d'écoulement du fluide dans le siège de soupape (6, 7) et/ou dans la trémie de sortie (8).

5. Soupape de régulation selon la revendication 1, **caractérisée en ce qu'**un étage de réduction de pression (28) situé en aval du siège de soupape (6, 7), s'il fait partie de la soupape de régulation, présente un élargissement rapide (29) dans la trémie de sortie (8) dans le sens d'écoulement du fluide, où la transition directe du siège de soupape (6, 7) vers la trémie de sortie (8) est de préférence en forme de coque avec un petit rayon.

6. Soupape de régulation selon la revendication 1, **caractérisée en ce que** le ressort Belleville (27) est en forme de ressort radial oblique et se compose d'Inconel.

7. Soupape de régulation selon la revendication 1, **caractérisée en ce que** le lit (30) en billes de carbure de tungstène (31), s'il fait partie de la soupape de régulation, est limité par des plaques de tamis (32, 33, 34) côté entrée d'écoulement et côté sortie d'écoulement, où les trous (35) des plaques de tamis (32, 34) sont de préférence de forme carrée.

8. Soupape de régulation selon la revendication 7, **caractérisée en ce qu'**au moins deux plaques de tamis (33, 34) sont disposées l'une derrière l'autre côté sortie d'écoulement, dans laquelle la première plaque de tamis (34) est en carbure de tungstène massif et la seconde plaque de tamis (33) est en acier réfractaire et les trous (35) de la seconde plaque de tamis (34) sont disposés exactement derrière les trous (35) de la première plaque de tamis (33) ou bien les trous (35) de la première plaque de tamis (34) sont légèrement plus petits que les trous de la seconde plaque de tamis (33), où les trous (35) de la seconde plaque de tamis (33) s'élargissent de façon conique.

9. Soupape de régulation selon la revendication 1, **caractérisée en ce qu'**un support de siège de soupape (5), partie intégrante du siège de soupape, et le support de joints (14) sont conçus pour aller rétrécissant de façon légèrement conique dans le sens d'écoulement, qui sont comprimés également contre le logement de soupape (100) qui va également rétrécissant de façon légèrement conique.

10. Soupape de régulation selon la revendication 1, **caractérisée en ce que** de courts supports de joints (14) ou similaire dispositif d'amortissement sont prévus entre les parties en carbure de tungstène ou les parties céramiques et le corps d'acier et les parties supports de siège de soupape, si elles font partie de la soupape de régulation.

11. Soupape de régulation selon la revendication 1, **caractérisée en ce que** le support de joints (14) est connecté à un raccord (15) s'étendant dans une pièce de liaison ou lanterne (16), elle-même reliée à un entraînement hydraulique (17), dans laquelle les parties internes (5, 6, 7, 12, 13, 14) peuvent être retirées sans démonter la partie de liaison ou la lanterne (16) et l'entraînement hydraulique (17).

12. Soupape de régulation selon la revendication 11, **caractérisée en ce que** la pièce de liaison ou la lanterne (16) est allongé et élargi pour procéder à des opérations de réparation et d'entretien.

13. Soupape de régulation selon la revendication 12, **caractérisée en ce que** l'on utiliser l'entraînement hydraulique (17), pour extraire les parties internes (5, 6, 7, 12, 13 et 14) du logement de soupape (100).

14. Soupape de régulation selon la revendication 1, **caractérisée en ce que** le carbure de tungstène contient au moins environ 10% de liant, à savoir du cobalt ou du nickel et présente une granulométrie médiane dans laquelle le liant est protégé par un revêtement spécial, durcissant.

15. Soupape de régulation double, **caractérisée en ce que** la soupape de régulation double se compose d'une grosse soupape partielle (36) et d'au moins une petite soupape partielle (37), dans laquelle la grosse soupape partielle (36) est sous forme de soupape à piston "marche-arrêt" et la petite soupape (37) est sous forme de soupape de régulation selon l'une des revendications 1 à 14.

16. Soupape de régulation selon la revendication 15, **caractérisée en ce que** l'axe longitudinal de la petite soupape partielle (37) est inclinée par rapport à l'axe longitudinal de la grosse soupape partielle (36) avec un angle (alpha) de préférence 20° environ.

17. Soupape de régulation selon la revendication 15, **caractérisée en ce que** la petite soupape partielle (37) est en forme de soupape de régulation pulsante et/ou de soupape de régulation marche-arrêt.

18. Soupape de régulation selon la revendication 15, **caractérisée en ce que** la trémie d'admission (3) est en deux parties de telle sorte qu'il n'y pas de sections agrandies avant les sièges de soupape (6,6a).

19. Soupape de régulation selon la revendication 15, **caractérisée en ce que** la grosse soupape partielle (36) est constituée de telle sorte qu'elle absorbe au moins 80% du débit maximal sans régulation, en étant réglable d'environ 20%.

20. Soupape de régulation selon la revendication 15, **caractérisée en ce que** la petite soupape partielle (37) est constituée de telle sorte qu'elle absorbe jusqu'à environ 20% du débit maximal avec régulation.
